# EUROPEAN PATENT APPLICATION

(11) **EP 4 455 969 A1**
(43) Date of publication of application: **30.10.2024**
(21) Application number: 24155798.2
(22) Date of filing: 05.02.2024
(51) Int. Cl.: G06Q 20/18, G06Q 20/20, G06V 10/98, G07G 1/00, G07G 1/14

(54) **COMMODITY IDENTIFICATION SYSTEM**

(30) Priority: 24.04.2023 JP 2023070949
(71) Applicant: Toshiba TEC Kabushiki Kaisha, Tokyo 141-8562 (JP)
(72) Inventor: Harada, Shintaro, Tokyo, 141-8562 (JP); Kato, Suguru, Tokyo, 141-8562 (JP)
(74) Representative: Bandpay & Greuter

(57) **Abstract**

According to embodiments, a commodity identification system comprises a camera interface and a processor. The processor is configured to: acquire a first image of a commodity from a camera; detect a commodity area within the first image, that shows the commodity; attempt to identify the commodity from the commodity area based on a first copy of previously stored visual features for a plurality of commodities; and upon the attempt to identify the commodity from the commodity area being unsuccessful, perform the following: acquire a second image of the commodity from the camera, wherein the second image includes a visible code; generate error identification data that includes the first image and includes a commodity code associated with the visible code; and update the first copy of the previously stored visual features to include visual features of the commodity that are extracted from the first image.

## Description

### FIELD

Embodiments described herein relate generally to a commodity identification system.

### BACKGROUND

There is proposed a registration system in which a commodity to be put into a shopping cart by a purchaser, is identified from an image, and the commodity is automatically registered as a commodity for purchase in a store at which commodities are displayed.

However, a commodity's packaging is frequently changed, and if data stored in a dictionary data structure (such a data structure referred to herein as a "dictionary" and such data referred to herein as "dictionary data"), which is to be referred to at the time of identification, is not up to date, there is a possibility that a commodity cannot be identified. Also, if none of the dictionary data is related to a newly available commodity, the commodity cannot be identified.

Therefore, a system administrator is required to frequently update the dictionary data, which creates a heavy burden for the administrator.

Considering the above-described circumstances, it is desired to reduce the burden on the administrator regarding maintenance of the dictionary data to be used for commodity identification.

### DISCLOSURE OF THE INVENTION

To this end, a commodity identification system and a method of updating such a commodity identification system according to appended claims are provided.

The method may further comprise: downloading the second copy of the previously stored visual features from the POS server; and using the downloaded second copy of the previously stored visual features to update the first copy of the previously stored visual features.

The method may further comprise: in response to the attempt to identify the commodity from the commodity area being unsuccessful, executing a guidance operation by notifying a purchaser to cause the camera to photograph the visible code.

Notifying the purchaser may include prompting the purchaser to hold the visible code in front of the camera.

Prompting the purchaser to hold the visible code in front of the camera may include displaying a text message on a screen of the shopping terminal.

Prompting the purchaser to hold the visible code in front of the camera may include outputting a voice message using a sound unit.

### BRIEF DESCRIPTION OF THE DRAWINGS

FIG. 1 is a block diagram illustrating a schematic configuration of a transaction processing system according to embodiments.
FIG. 2 is a perspective view illustrating a cart terminal mounted on a cart.
FIG. 3 is a flowchart of a registration process.
FIG. 4 is a flowchart of the registration process.
FIG. 5 is a flowchart of a dictionary management process.

### DETAILED DESCRIPTION

An embodiment of a commodity identification system of the present disclosure provides a technological improvement over other systems by reducing a burden on an administrator regarding maintenance of dictionary data to be used for commodity identification for retail store point-of-sale systems or the like.

In general, according to one embodiment, a commodity identification system comprises a camera interface and a processor. The processor is configured to: acquire a first image of a commodity from a camera via the camera interface; detect a commodity area within the first image, that shows the commodity; attempt to identify the commodity from the commodity area based on a first copy of previously stored visual features for a plurality of commodities; and upon the attempt to identify the commodity from the commodity area being unsuccessful, perform the following: acquire a second image of the commodity from the camera via the camera interface, wherein the second image includes a visible code; generate error identification data that includes the first image and includes a commodity code associated with the visible code; and update the first copy of the previously stored visual features to include visual features of the commodity that are extracted from the first image. Embodiments will be described below with reference to the drawings. As an example embodiment, description will be given of a transaction processing system incorporating functions of a commodity identification system.

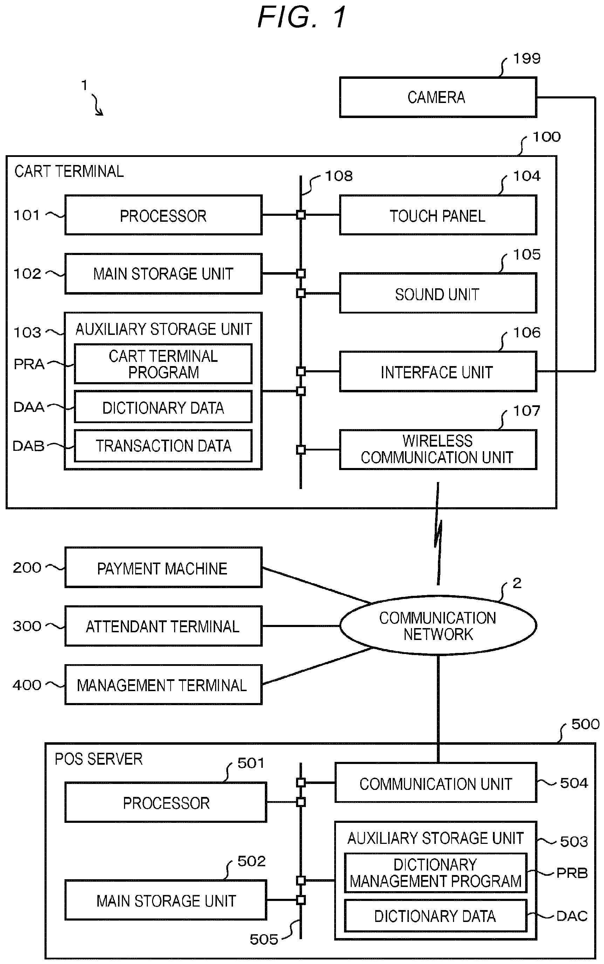

FIG. 1 is a block diagram illustrating a schematic configuration of a transaction processing system 1 according to embodiments. The depicted transaction processing system 1 includes a cart terminal 100 and a point-of-sale (POS) server 500.

The transaction processing system 1 includes a cart terminal 100, a payment machine 200, an attendant terminal 300, a management terminal 400, and a POS server 500, which communicate with each other via a communication network 2.

The communication network 2 uses the Internet, a virtual private network (VPN), a local area network (LAN), a public communication network, a mobile communication network, and the like independently or in combination as appropriate. As one example of the communication network 2, the LAN and the Internet may be used in combination.

In general, any number of cart terminals 100, payment machines 200, attendant terminals 300, management terminals 400, and POS servers 500 may be included in the transaction processing system 1, but these are represented by only one of each component in FIG. 1 for sake of simplicity.

The cart terminal 100 is an information processing terminal mounted on a shopping cart (hereinafter referred to as a "cart") provided in a store. The cart terminal 100 is provided together with the cart to a purchaser who intends to purchase a commodity at the store. The cart terminal 100 is a terminal device that receives an input operation from the purchaser and executes a process of registering a commodity for purchase by the purchaser. The cart terminal 100 executes a process of identifying a commodity from an image including the commodity. In other words, the cart terminal 100 functions as a commodity identification device.

The payment machine 200 is installed in the store and executes a payment process related to settlement of a transaction for the commodity registered by the cart terminal 100, based on a price thereof. The payment machine 200 performs the payment process upon receiving an input operation from an operator. The operator of the payment machine 200 is typically the purchaser. However, a clerk may also be the operator of the payment machine 200 in some examples.

The attendant terminal 300 is an information processing terminal operated by a clerk. The attendant terminal 300 is a terminal device for a user interface related to supporting work related to a transaction processed by the transaction processing system 1. The work for the clerk is, for example, monitoring execution of a transaction in progress and appropriately supporting the purchaser.

The management terminal 400 is an information terminal serving as a user interface for an administrator who manages the transaction processing system 1. As the management terminal 400, various general-purpose information processing devices such as a desktop computer, a laptop or notebook computer, a tablet computer, and a smartphone can be used.

The POS server 500 is an information processing device that executes a process of managing a sales transaction of a commodity processed by the registration process of the cart terminal 100 and by the payment process of the payment machine 200. The POS server 500 also executes an information process of managing dictionary data for commodity identification (hereinafter referred to as a dictionary management process). The POS server 500 functions as a dictionary management device by executing the dictionary management process.

The cart terminal 100 includes a processor 101, a main storage unit 102, an auxiliary storage unit 103, a touch panel 104, a sound unit 105, an interface unit 106, a wireless communication unit 107, a transmission line 108, and the like. The processor 101, the main storage unit 102, the auxiliary storage unit 103, the touch panel 104, the sound unit 105, the interface unit 106, and the wireless communication unit 107 communicate with each other via the transmission line 108.

The processor 101 is one or more central processing units (CPUs) of the cart terminal. The processor 101 executes an information process of controlling respective units configured to implement various functions of the cart terminal 100, the processor 101 executing the information process according to information processing programs such as an operating system and an application program.

The main storage unit 102 includes read-only memory (ROM) and random-access memory (RAM). The main storage unit 102 stores a part of the information processing programs in the ROM. The main storage unit 102 also stores data necessary for the processor 101 to execute the process of controlling each unit of the cart terminal 100 in the ROM or RAM. The main storage unit 102 uses the RAM as a work area for the processor 101.

The auxiliary storage unit 103 can be, for example, an electric erasable programmable read-only memory (EEPROM), a hard disk drive (HDD), a solid-state drive (SSD), or any other well-known storage device. The auxiliary storage unit 103 stores data used by the processor 101 in performing various processes, and stores data generated by processes of the processor 101. The auxiliary storage unit 103 also stores the information processing programs. Specifically, according to embodiments, the auxiliary storage unit 103 stores a cart terminal program PRA, which is one of the information processing programs. The cart terminal program PRA is an application program in which procedures for a registration process are described. Additionally, a part of the storage area of the auxiliary storage unit 103 stores dictionary data DAA and transaction data DAB. The dictionary data DAA is data representing an identification dictionary for identifying a commodity shown in an image. The transaction data DAB is data representing content of a transaction. It should be noted that, at a predetermined dictionary download time, such as after the cart terminal 100 is initially activated, dictionary data DAC is downloaded from the POS server 500 to the cart terminal 100 and stored in the auxiliary storage unit 103 as updated dictionary data DAA.

The touch panel 104 includes a screen for displaying information to an operator. The touch panel 104 accepts as input, an instruction based on an operator's touch operation on the screen.

The sound unit 105 outputs sounds for various types of guidance and for warnings. As the sound unit 105, various well-known sound devices such as a speech synthesis device and a buzzer can be used independently or in combination.

An external device such as a camera 199 is connected to the interface unit 106, the interface unit 106 thus functioning as a camera interface. The interface unit 106 manages transmission of data to and reception of data from the camera 199. As the interface unit 106, an existing universal serial bus (USB) controller or the like can be used. The camera 199 creates an image by photographing a photographing range including the entire inner space of a shopping basket of the cart. The camera 199 outputs image data representing the image created by photographing the photographing range. It should be noted that the camera 199 may repeat photographing periodically or may perform photographing in response to instructions from the processor 101. However, a camera built in to the cart terminal 100 may be used instead of the camera 199 in some examples.

The wireless communication unit 107 executes a process of wireless data communication via the communication network 2. As the wireless communication unit 107, any existing communication device for wireless communication can be used. A wired communication unit connected to the communication network 2 may be used instead of or in addition to the wireless communication unit 107.

The transmission line 108 includes an address bus, a data bus, a control signal line, and the like, and delivers data and control signals transmitted and received by the connected respective units of the cart terminal 100.

As a basic hardware of the cart terminal 100, for example, the hardware of a tablet computer may be used. The cart terminal 100 is generally distributed to a purchaser while the cart terminal program PRA is stored in the auxiliary storage unit 103. However, hardware in which the cart terminal program PRA is not stored in the auxiliary storage unit 103 or in which an application program of a different version but of the same type as the cart terminal program PRA is stored in the auxiliary storage unit 103, and the cart terminal program PRA, may be distributed to the purchaser separately. The cart terminal 100 may be configured by writing the cart terminal program PRA to the auxiliary storage unit 103 in response to the operation of any operator. The cart terminal program PRA can be distributed by recording the same in a removable recording medium such as a magnetic disk, a magneto-optical disk, an optical disk, or semiconductor memory, or by performing communication via a network.

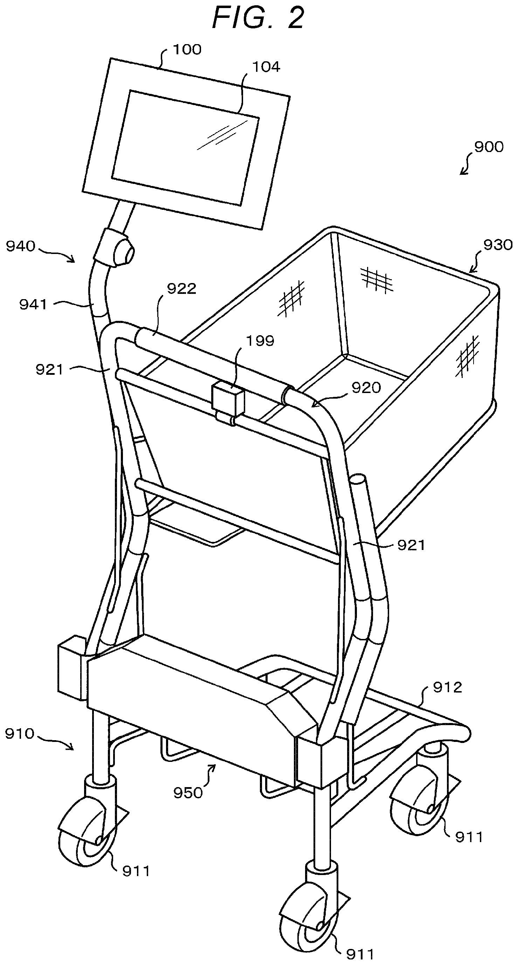

FIG. 2 is a perspective view illustrating an example of a state in which the cart terminal 100 is mounted on a cart 900.

A cart 900 includes a caster part 910, a handle frame part 920, a basket part 930, a support part 940, and a battery case 950.

The caster part 910 includes four wheels 911 configured to smoothly move the cart 900 on the floor. Each of the wheels 911 is mounted on a frame 912 and rotatable around a vertical axis of the frame 912.

The handle frame part 920 includes a pair of vertical frames 921 and a handlebar 922. The vertical frames 921 are erected upwards from two of the wheels 911 of the caster part 910. The handlebar 922 connects the upper ends of the vertical frames 921.

The basket part 930 is provided at a middle portion of the handle frame part 920 and formed to extend in the horizontal direction. The basket part 930 has a basket shape opened upward to allow a commodity to be put in the basket part 930, and functions as a container that stores a commodity to be purchased by a purchaser. The camera 199 is mounted at an upper-end portion of the basket part 930, is located on the side of the basket part 930 closest to the handlebar 922, and is able to photograph the opening of the basket part 930.

The support part 940 includes a pole 941. The pole 941 is mounted on one of the vertical frames 921 such that a tip of the pole 941 is positioned above the handlebar 922. The cart terminal 100 described above is mounted on the tip of the pole 941. Accordingly, the support part 940 supports the cart terminal 100 in the state illustrated in FIG. 2.

The battery case 950 is mounted between the vertical frames 921 and is disposed on the lower-end side of the handle frame part 920. The battery case 950 stores a battery that is used as an external power supply of the cart terminal 100.

Returning to FIG. 1, the POS server 500 includes a processor 501, a main storage unit 502, an auxiliary storage unit 503, a communication unit 504, a transmission line 505, and the like. The processor 501, the main storage unit 502, the auxiliary storage unit 503, and the communication unit 504 communicate with each other via the transmission line 505.

The processor 501 is one or more CPUs. The processor 501 executes an information process of controlling respective units of the POS server 500 configured to implement various functions of the POS server 500, the processor 501 executing the information process according to information processing programs such as an operating system and an application program.

The main storage unit 502 includes ROM and RAM. The main storage unit 502 stores a part of the information processing programs in the ROM. The main storage unit 502 may also store data necessary for the processor 501 to execute the process of controlling each unit, in the ROM or RAM. The main storage unit 502 uses the RAM as a work area for the processor 501.

The auxiliary storage unit 503 can use, for example, an EEPROM, an HDD, an SSD, or any other well-known storage device. The auxiliary storage unit 503 stores data used by the processor 501 in performing various processes and stores data generated by processes of the processor 501. The auxiliary storage unit 503 stores the information processing programs. Specifically, according to embodiments, the auxiliary storage unit 503 stores a dictionary management program PRB, which is one of the information processing programs. The dictionary management program PRB is an application program in which procedures for a dictionary management process are described. Additionally, a part of the storage area of the auxiliary storage unit 503 stores the dictionary data DAC. The dictionary data DAC is data representing an identification dictionary for identifying a commodity shown in an image. The dictionary data DAC is created by a worker based on commodities sold at the store and may be written in the auxiliary storage unit 503 when the transaction processing system 1 is introduced to the store.

The communication unit 504 executes a process of data communication via the communication network 2. The communication unit 504 can use any existing communication device for accessing the Internet.

The transmission line 505 includes an address bus, a data bus, a control signal line, and the like, and delivers data and control signals transmitted and received by connected respective units of the POS server 500.

As the hardware of the POS server 500, for example, a server can be used. The POS server 500 may be provided to a store with the dictionary management program PRB already stored in the auxiliary storage unit 503. However, hardware without the dictionary management program PRB or with an application program of a different version but of the same type as the dictionary management program PRB stored in the auxiliary storage unit 503 may be provided to a store, and the dictionary management program PRB may be provided to the store separately from the hardware. The POS server 500 may be configured by writing the dictionary management program PRB to the auxiliary storage unit 503 in response to the operation of any operator. The dictionary management program PRB can be provided to a store in a removable recording medium such as a magnetic disk, a magneto-optical disk, an optical disk, or semiconductor memory, or by communication (download) via a network.

Next, the operation of the transaction processing system 1 configured as described above, will be described. It should be noted that the contents of various processes are merely examples, and it is possible to change the order of parts of the processes, omit parts of the processes, and add other processes as appropriate. For example, in the following description, a part of a process may not be described to facilitate understanding of the specific operations of embodiments of the present disclosure. For example, if a certain type of error occurs, a process may be performed to deal with such an error. For example, in various standby states, occurrence of an event different from an event to be described, may be detected, and then, one process may yield to another process corresponding to the event that occurred.

A customer in a commodity store, that is, a person (purchaser) who intends to purchase commodities displayed and sold at the commodity store, performs a predetermined operation for starting the use of a cart terminal 100 that was in a previously unused state. After the operation is performed, the processor 101 starts a registration process based on the cart terminal program PRA.

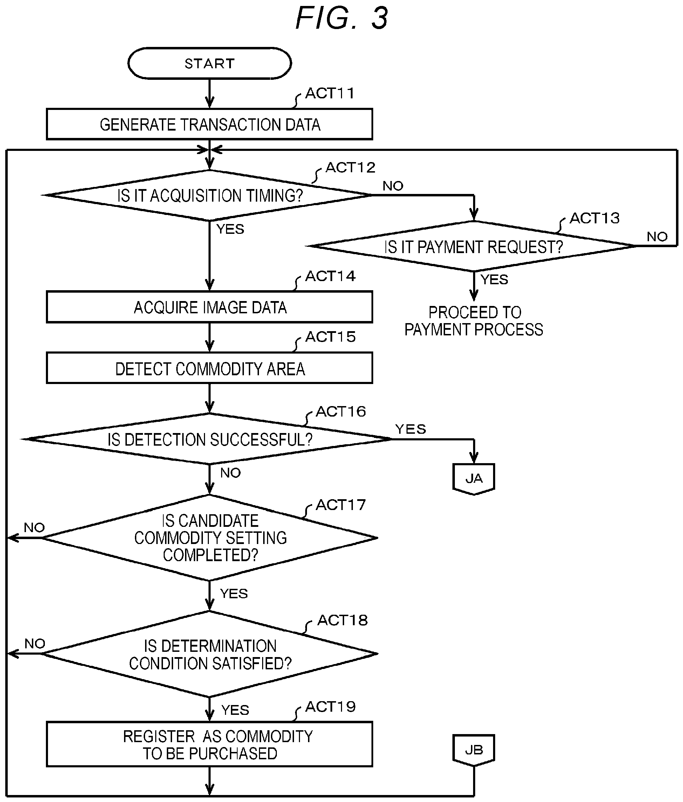

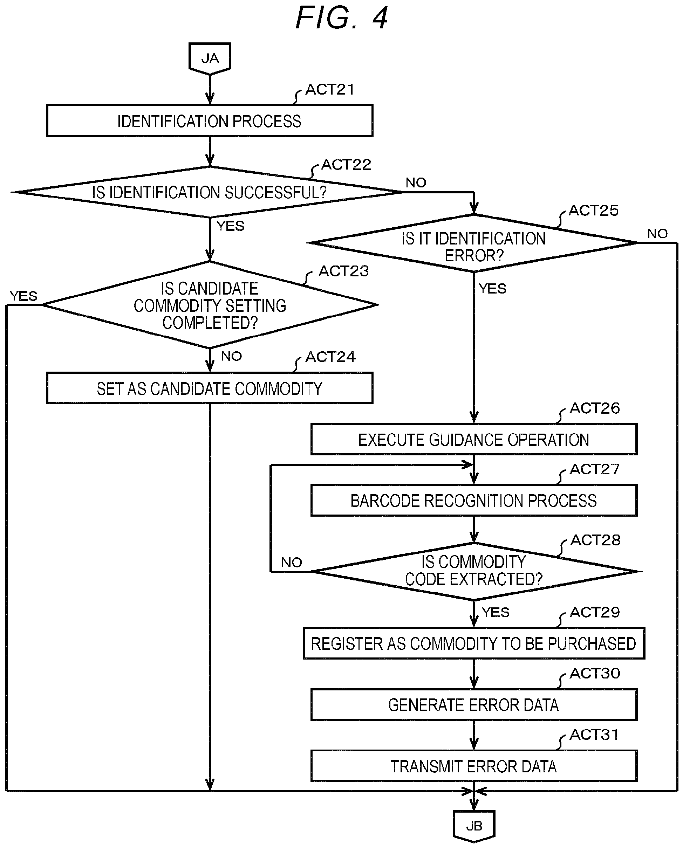

FIGS. 3 and 4 are flowcharts of the registration process.

In ACT 11 of FIG. 3, the processor 101 generates new transaction data DAB related to a new (target) transaction. For example, the processor 101 may set or select a new transaction code different from a previous transaction code according to a predetermined rule. The processor 101 generates the new transaction data DAB (including the new transaction code, but without commodity information at the moment) and stores the generated new transaction data DAB in the auxiliary storage unit 103.

In ACT 12, the processor 101 checks whether it is an acquisition time for an image (a time to acquire an image). If not, the processor 101 determines NO and proceeds to ACT 13. The acquisition time may be immediately after the registration process proceeds from ACT 11 to ACT 12 or may be after fixed-time intervals. The acquisition time may be appropriately set by, for example, a developer of the cart terminal program PRA. It should be noted that the acquisition time should occur at least once per commodity to be purchased when a commodity to be put in the basket part 930 passes through a photographing range of the camera 199.

In ACT 13, the processor 101 checks whether payment has been requested. If not, the processor 101 determines NO and returns to ACT 12.

Accordingly, in ACT 12 and ACT 13, the processor 101 waits for an acquisition time or for a payment request.

If it is the acquisition time, the processor 101 determines YES in ACT 12 and proceeds to ACT 14.

In ACT 14, the processor 101 acquires image data created and output by the camera 199. For example, if the camera 199 repeats photographing at fixed-time intervals, the processor 101 acquires image data for the latest photographing performed by the camera 199. If the camera 199 performs photographing in response to an instruction from the processor 101, the processor 101 instructs the camera 199 to perform photographing, and the camera 199 performs photographing in response to the instruction, thereby creating image data to be output. The processor 101 stores the acquired image data in the main storage unit 102 or the auxiliary storage unit 103. Accordingly, the processor 101 executes an information processing based on the cart terminal program PRA, thereby causing the cart terminal 100 to function as an acquisition unit configured to acquire an image represented by image data.

In ACT 15, the processor 101 detects, in the acquired image data, an area in which a commodity is shown (hereinafter referred to as a commodity area). In the determination of the commodity area, deep learning using a convolutional neural network (CNN) or a well-known method using graph cuts, can be used, but the methods are not limited thereto.

In ACT 16, the processor 101 checks whether the commodity area was successfully detected in ACT 15. If not, the processor 101 determines NO in ACT 16 and proceeds to ACT 17.

In ACT 17, the processor 101 checks whether a commodity serving as a candidate to be registered (hereinafter referred to as a candidate commodity) has been set (candidate selection has been completed). If not, the processor 101 determines NO in ACT 17 and returns to the standby state of ACT 12 and ACT 13.

A purchaser shops for a commodity to purchase in the store. The purchaser picks up the commodity to be purchased and puts the commodity in the basket part 930. In this process, the commodity passes through a photographing range of the camera 199 and is then shown in an image output by the camera 199. In other words, the standby state in ACT 12 and ACT 13 is repeatedly performed until a candidate commodity is successfully set based on an image acquisition from the camera 199. If a commodity that a purchaser intends to put in the basket part 930 is shown in an image, the processor 101 detects the commodity area in ACT 15. Then, the processor 101 determines YES in ACT 16 and proceeds to ACT 21 in FIG. 4.

In ACT 21, the processor 101 executes an identification process. The identification process is a process of identifying the commodity based on a commodity area detected in ACT 15. The identification process uses the dictionary data DAA. For an identification processing method, for example, deep learning using a CNN for image recognition may be used. Alternatively, any method such as optical character recognition (OCR) or feature point matching may be used, and the possible methods are not limited thereto. Accordingly, the processor 101 executes information processing based on the cart terminal program PRA, thereby causing the cart terminal 100 to function as an identification unit.

In ACT 22, the processor 101 confirms whether the identification in ACT 21 was successful. If the identification was successful, the processor 101 determines YES and proceeds to ACT 23.

In ACT 23, the processor 101 checks whether a candidate commodity has already been set. If not, the processor 101 determines NO and proceeds to ACT 24.

In ACT 24, the processor 101 sets the commodity identified in ACT 21 as a candidate commodity. The processor 101 then returns to the standby state of ACT 12 and ACT 13 of FIG. 3.

During the time a commodity is passing through the photographing range of the camera 199, the acquisition time may be reached a plurality of times (e.g., multiple images of the same commodity may be acquired). Although the processor 101 identifies the same commodity in a repeated identification process in ACT 21 for each of the multiple images of the commodity, the commodity has already been set as a candidate commodity after identifying the commodity using the first image acquired thereof. Therefore, the processor 101 will determine YES in ACT 23 of FIG. 4, skip ACT 24, and return to the standby state of ACT 12 and ACT 13 of FIG. 3.

When a purchaser intends to put a commodity into the basket part 930 and the commodity passes through the photographing range of the camera 199, the processor 101 may repeat ACT 14 to ACT 16 of FIG. 3 and ACT 21 to ACT 23 of FIG. 4 every time an acquisition time is reached. However, the commodity first identified in ACT 21 remains as the set candidate commodity.

Once the commodity passes through the photographing range of the camera 199 and is no longer shown in the image created by the camera 199, the processor 101 is unable to detect the commodity area in ACT 15 of FIG. 3. In response thereto, the processor 101 determines NO in ACT 16 and proceeds to ACT 17. In the present explanation, since the candidate commodity has already been set, the processor 101 determines YES in ACT 17, and the registration process proceeds to ACT 18.

In ACT 18, the processor 101 checks whether a condition for determining a candidate commodity as a commodity to be purchased, has been satisfied. The determination condition may be appropriately set by, for example, a developer of the cart terminal program PRA. A determination condition may be that YES has been determined in ACT 17, a specified number of times in a row". The processor 101 determines NO in ACT 18 if the determination condition is not satisfied, and returns to the standby state of ACT 12 and ACT 13. Accordingly, the processor 101 repeats ACT 14 to ACT 18 at every acquisition time until the determination condition is satisfied, even if a commodity area cannot be detected after a candidate commodity is set. If the determination condition is satisfied, the processor 101 determines YES in ACT 18 and proceeds to ACT 19.

In ACT 19, the processor 101 registers the candidate commodity as a commodity to be purchased. Specifically, the processor 101 updates the transaction data DAB to include a commodity code of the candidate commodity to be purchased. The processor 101 then returns to the standby state of ACT 12 and ACT 13.

It should be noted that after ACT 19, the processor 101 cancels the previous setting of the candidate commodity. Therefore, the processor 101 will determine NO in ACT 16 and proceed to ACT 17 unless a new commodity area was detected in ACT 15. Until such point, in ACT 17, the processor 101 determines NO because it cannot be confirmed that there is a candidate commodity, and returns to the standby state of ACT 12 and ACT 13.

If the dictionary data DAAis no longer appropriate (fully up-to-date) due to a change in the packaging of the commodity shown in the commodity area, or if the dictionary data DAA otherwise does not identify the commodity shown in the commodity area, the processor 101 may not be able to identify the commodity in ACT 21 of FIG. 4. Additionally, even if the dictionary data DAA is still appropriate, if a commodity is hidden by a hand such that visual features of the commodity are not sufficiently represented in an acquired image, in some cases, the commodity cannot be identified in ACT 21. In such cases, the processor 101 determines NO in ACT 22 and proceeds to ACT 25.

In ACT 25, the processor 101 checks whether an identification failure (identification error) has occurred, e.g., due to a deficiency in the dictionary data DAA or due to the purchaser not holding the commodity appropriately. For example, the processor 101 may check whether a predetermined condition for identifying an identification error is satisfied. The condition may be appropriately set by a developer of the cart terminal program PRA. The condition may be that NO has been determined in ACT 22, a specified number of times in a row". If such an identification error cannot yet be confirmed, the processor 101 determines NO in ACT 25, and returns to the standby state of ACT 12 and ACT 13 of FIG. 3.

It should be noted that if the purchaser puts a commodity into the basket part 930, there may be a system usage rule instructing the purchaser to appropriately hold the commodity to be purchased to allow the commodity to be photographed accurately by the camera 199. In such a case, a temporary failure in identification of a commodity, e.g., due to the commodity being hidden by a hand, may be resolved after a short period of time. Therefore, an identification error may be determined based on repeated failures in identification for a variety of reasons.

For example, if the processor 101 confirms that there is an identification error because a condition is satisfied, the processor 101 determines YES in ACT 25 of FIG. 4 and proceeds to ACT 26.

In ACT 26, the processor 101 executes a guidance operation. The guidance operation is an operation for notifying a purchaser to hold a barcode displayed on a commodity in front of the camera 199. For example, as the guidance operation, the processor 101 may display a guidance screen on the touch panel 104 including a text message to prompt a purchaser to hold in front of the camera 199, a barcode displayed on a commodity. In response to the purchaser holding the barcode in front of the camera 199, the camera 199 photographs the barcode and then outputs an image that includes the barcode. Additionally, as the guidance operation, the processor 101 may cause the sound unit 105 to output a warning sound that causes the purchaser to recognize the occurrence of an abnormality. Additionally, as the guidance operation, the processor 101 may cause the sound unit 105 to output a voice message to prompt a purchaser to hold in front of the camera 199, a barcode displayed on a commodity. The operation performed as the guidance operation may be appropriately set by, for example, a developer of the cart terminal program PRA, and may be executed by combining a plurality of the above-described operations. As such, the processor 101 executes an information process based on the cart terminal program PRA, thereby causing the cart terminal 100 to function as a guidance unit.

In ACT 27, the processor 101 executes a barcode recognition process. For example, the processor 101 may detect a barcode shown in the latest image output by the camera 199, and try to extract a commodity code from data represented by the barcode. If the commodity code can be extracted, the processor 101 acquires the commodity code serving as an identifier of the commodity. Accordingly, the processor 101 executes an information process based on the cart terminal program PRA, thereby causing the cart terminal 100 to function as a reading unit configured to read a commodity code serving as an identifier of a commodity, from a barcode, which is an example of a visible code.

In ACT 28, the processor 101 checks whether the commodity code was extracted by the barcode recognition process described above. If not, the processor 101 determines NO and returns to ACT 27. If ACT 27 is executed for at least the second time after passing through ACT 28, the processor 101 may acquire an image from the camera 199 different from the previously acquired image and treat the newly acquired image as a target to be processed.

If a barcode displayed on a commodity is held over the camera 199 by a purchaser so that the barcode is clearly shown in the image created by the camera 199 and a commodity code can be extracted in ACT 27, the processor 101 determines YES in ACT 28 and proceeds to ACT 29.

In ACT 29, the processor 101 registers the commodity identified by the commodity code extracted in ACT 27 as a commodity to be purchased. For example, the processor 101 may update transaction data DAB to include the commodity code extracted in ACT 27 as a commodity code of a commodity to be purchased.

In ACT 30, the processor 101 generates error data. The processor 101 generates the error data including at least the image data obtained in ACT 14 and the commodity code extracted in ACT 27. Accordingly, the processor 101 executes an information process based on the cart terminal program PRA, thereby causing the cart terminal 100 to function as a generation unit.

In ACT 31, the processor 101 transmits the error data generated in ACT 30 from the wireless communication unit 107 to the POS server 500 via the communication network 2. Then, the processor 101 returns to the standby state of ACT 12 and ACT 13 of FIG. 3. Such transmission of error data is an example of an output of error data. In other words, the processor 101 executes an information process based on the cart terminal program PRA, thereby causing the cart terminal 100 to function as an output unit.

Even if the identification fails in ACT 21 of FIG. 4, the processor 101 will determine NO in ACT 25 if the identification error cannot yet be confirmed, and will then return to the standby state of ACT 12 and ACT 13 of FIG. 3 without performing ACT 26 to ACT 31.

After completing the registration of the commodity to be purchased, the purchaser may perform an input operation for instructing the start of payment by using the touch panel 104. In response thereto, the processor 101 determines YES in ACT 13 of FIG. 3 and proceeds to a payment process. For example, the payment process may be the same process as that performed in an existing cart POS system. For example, the processor 101 may perform a process of transferring the transaction data DAB to the payment machine 200 through the communication network 2 for settling a transaction involving the purchase of one or more commodities based on prices thereof, as the payment process. Alternatively, if a settlement terminal is mounted on the cart 900 and the settlement terminal is connected to the cart terminal 100, a process of performing credit settlement of such a transaction, code settlement of such a transaction, and the like using the settlement terminal and the transaction data DAB may be performed as the payment process.

The processor 501 in the POS server 500 executes a dictionary management process based on the dictionary management program PRB.

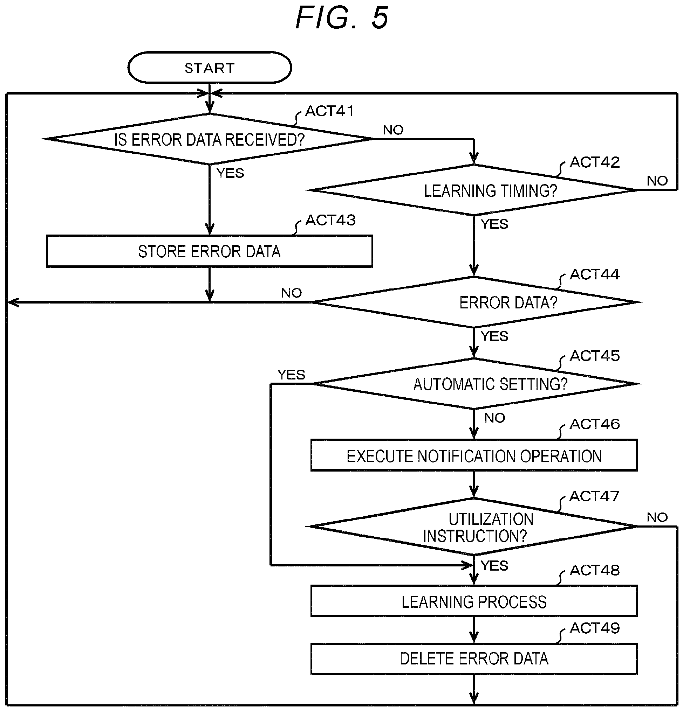

FIG. 5 is a flowchart of the dictionary management process.

In ACT 41, the processor 501 checks whether error data has been received. If not, the processor 501 determines NO and proceeds to ACT 42.

In ACT 42, the processor 501 checks whether it is a learning time. If not, the processor 501 determines NO and returns to ACT 41.

Accordingly, the processor 501 in ACT 41 and ACT 42 waits for error data to be received or for a learning time to arrive.

When the error data from the cart terminal 100 is transmitted to the POS server 500 via the communication network 2, the communication unit 504 receives the error data. The processor 501 then determines YES in ACT 41 and proceeds to ACT 43. In ACT 43, the processor 501 stores the error data received by the communication unit 504 in the auxiliary storage unit 503. The processor 501 then returns to the standby state of ACT 41 and ACT 42.

Accordingly, the processor 501 repeats ACT 43 every time error data is received by the communication unit 504. However, the processor 501 does not delete error data already stored in the auxiliary storage unit 503, and instead additionally stores newly received error data in the auxiliary storage unit 503. In other words, the processor 501 collects and stores error data in the auxiliary storage unit 503 each time error data is sent. Thus, the processor 501 executes an information process based on the dictionary management program PRB, thereby causing the POS server 500 to function as a collection unit.

The learning time may be appropriately set by, for example, a developer of the dictionary management program PRB or an administrator of the transaction processing system 1. As an example, the learning time may be at the end of each business day of a store where the transaction processing system 1 is used.

If it is the learning time, the processor 501 determines YES in ACT 42 and proceeds to ACT 44.

In ACT 44, the processor 501 confirms whether there is any error data. If no error data is stored in the auxiliary storage unit 503, the processor 501 determines NO and returns to the standby state of ACT 41 and ACT 42. However, if error data is stored in the auxiliary storage unit 503, the processor 501 determines YES in ACT 44 and proceeds to ACT 45.

In ACT 45, the processor 501 checks whether it has been set to automatically perform dictionary learning based on the error data. It should be noted that the setting corresponding to ACT 45 is an operation setting related to a dictionary management process, and can be set by the processor 501 in response to an instruction from the management terminal 400 provided by an administrator of the transaction processing system 1 or the like.

The processor 501 determines NO if automatic performance of dictionary learning has not be set, and proceeds to ACT 46.

The processor 501 in ACT 46 executes a notification operation. The notification operation notifies an administrator of the transaction processing system 1 of an event in which error data has been generated, that is, notifies the administrator of an event in which commodity registration by reading a barcode has been performed in response to the occurrence of an identification error. As a guidance operation, the processor 501 may request the management terminal 400 to display a notification screen including a text message or the like to prompt the administrator to update the dictionary data DAC. In response to such a request, the management terminal 400 displays such a notification screen. In the present embodiment, the notification screen also serves as a graphical user interface (GUI) for receiving an instruction from an administrator as to whether the error data should be used for dictionary learning. Since an administrator can recognize that updating of the dictionary data DAC is necessary when receiving a notification by such a notification operation, it can also be said that the notification operation recommends an administrator to update the dictionary data DAC. Accordingly, the processor 501 executes an information process based on the dictionary management program PRB, thereby causing the POS server 500 to function as a recommendation unit.

In ACT 47, the processor 501 confirms whether utilization of the error data is instructed by the administrator. The processor 501 may determine YES, for example, if an administrator has instructed such utilization via the management terminal 400 and the management terminal 400 has notified the POS server 500 of the instruction, and then proceed to ACT 48. It should be noted that the processor 501 determines YES in ACT 45 if it is set to automatically perform dictionary learning, skips ACT 46 and ACT 47, and proceeds to ACT 48.

In ACT 48, the processor 501 performs a learning process. According to the learning process, the processor 501 updates the dictionary data DAC using the error data. To update the dictionary data DAC, the processor 501 extracts visual features of the commodity shown in the acquired image included in the error data, and adds to the dictionary data DAC, the extracted visual features and the commodity code included in the same error data, associating the visual features with the commodity code. It should be noted that the specific process of updating the dictionary data DAC may be, for example, any known process of updating the same type of dictionary data. It should also be noted that the dictionary data DAC is then downloaded by the cart terminal 100 and rewritten as updated dictionary data DAA at the subsequent dictionary download time, such that the updating of the dictionary data DAC is also reflected in the dictionary data DAA. Accordingly, the processor 501 executes an information process based on the dictionary management program PRB, thereby causing the POS server 500 to function as an updating unit.

In ACT 49, the processor 501 deletes the error data utilized for the learning process in ACT 48, from the auxiliary storage unit 503. The processor 501 then returns to the standby state of ACT 41 and ACT 42.

If the processor 501 is instructed not to utilize the error data, the processor 501 determines NO in ACT 47, skips ACT 48 and ACT 49, and returns to the standby state of ACT 41 and ACT 42.

It should be noted that if utilization of the error data is not instructed, the administrator should try to perform dictionary learning using a method different from the above dictionary management process. Accordingly, if determining NO in ACT 47, the processor 501 may support the work of updating the dictionary data DAC, such as by requesting the management terminal 400 to display a screen including a list of commodities identified by the commodity code included in the error data, which may be commodities that are difficult to recognize based on the dictionary data DAC.

As described above, if the transaction processing system 1 fails to identify a commodity based on visual features of the commodity extracted from the image and commodity registration is performed by reading a barcode, the transaction processing system 1 generates error data including image data of the failed identification process and a commodity code obtained by reading the barcode. Accordingly, an administrator of the transaction processing system 1 or the like can recognize that the dictionary data DAA and DAC are inappropriate (not up to date) based on the error data. It should be noted that the image data and the commodity code included in the error data are the same image data and commodity code that are acquired in response to operations of a purchaser, and that are utilized for registration of a commodity to be purchased. Accordingly, it is not required to perform an additional operation for generation of the error data.

The transaction processing system 1 transmits the error data generated by the cart terminal 100, to the POS server 500, and the POS server 500 collects the error data. Accordingly, error data generated by each of a plurality of cart terminals 100 are gathered and managed by the POS server 500. An administrator can review the error data by accessing the POS server 500 from the management terminal 400 without operating the plurality of cart terminals 100 individually.

If a commodity shown in an image cannot be identified by the identification process, the transaction processing system 1 prompts a purchaser to read a barcode through the guidance operation. Accordingly, it is possible to reliably obtain a commodity code included in the error data.

The transaction processing system 1 executes a notification operation in response to the generation of the error data. Accordingly, it is possible to prompt an administrator to update the dictionary data.

The transaction processing system 1 updates dictionary data based on error data. Accordingly, it is not required for an administrator to perform a separate operation of inputting data for updating the dictionary.

If the transaction processing system 1 is set to automatically perform dictionary learning based on the error data, the dictionary data is updated based on the error data without performing the notification operation. Accordingly, an administrator does not need to manually perform any operation of updating the dictionary data based on the error data.

The above-described embodiments can be modified in various ways as follows.

The commodity identification system may be used in combination with another commodity registration device or another transaction processing device, and may be implemented as a commodity identification device having a primary function of identifying a commodity.

The use of the commodity identification result is not limited to purchase registration for a transaction process, and can be used for any purpose.

Some of the processes executed by the processor 101 in the above-described embodiments may be executed by the POS server 500 or any other one of or a plurality of information processing devices. For example, the cart terminal 100 may perform only a user interface operation, and the POS server 500 may perform the various information processes of specifying (identifying) a commodity to be purchased. In other words, each of the acquisition unit, the identification unit, the reading unit, and the generation unit may be provided in another information processing device included in the transaction processing system 1, such as the POS server 500, rather than the cart terminal 100, and each of these units may be appropriately distributed among one or more information processing devices incorporated in the transaction processing system 1.

The processor 101 of the cart terminal 100 may update the dictionary data DAA stored in the auxiliary storage unit 103 based on the error data.

Each function described as implemented by the processor 101 through information processing can also be implemented partially or entirely by dedicated hardware that executes information processing that is not based on a program, such as a logic circuit. Similarly, each of the various functions described above can be implemented by combining hardware such as a logic circuit with software control. While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention.

## Claims

1. A commodity identification system, comprising:
a camera interface; and
a processor configured to:
acquire a first image of a commodity from a camera via the camera interface;
detect a commodity area within the first image, that shows the commodity;
attempt to identify the commodity from the commodity area based on a first copy of previously stored visual features for a plurality of commodities; and
upon the attempt to identify the commodity from the commodity area being unsuccessful, perform the following:
acquire a second image of the commodity from the camera via the camera interface, wherein the second image includes a visible code;
generate error identification data that includes the first image and includes a commodity code associated with the visible code; and
update the first copy of the previously stored visual features to include visual features of the commodity that are extracted from the first image.

2. The commodity identification system according to claim 1, further comprising:
a shopping terminal that includes the processor; and
a point-of-sale (POS) server, wherein
the processor is further configured to:
transmit the generated error identification data to the POS server, and
the POS server is configured to:
store the transmitted error identification data.

3. The commodity identification system according to claim 2, wherein the POS server is further configured to:
upon the generation of the error identification data, notify an administrator to update the previously stored visual features.

4. The commodity identification system according to claim 2 or 3, wherein the POS server is further configured to:
update a second copy of the previously stored visual features, based on the generated error identification data.

5. The commodity identification system according to claim 4, wherein the POS server updates the second copy of the previously stored visual features automatically.

6. The commodity identification system according to claim 4 or 5, wherein the processor is further configured to:
download the second copy of the previously stored visual features from the POS server; and
use the downloaded second copy of the previously stored visual features to update the first copy of the previously stored visual features.

7. The commodity identification system according to any one of claims 1 to 6, wherein the processor is further configured to:
in response to the attempt to identify the commodity from the commodity area being unsuccessful, execute a guidance operation by notifying a purchaser to cause the camera to photograph the visible code.

8. The commodity identification system according to claim 7, wherein the processor notifies the purchaser by prompting the purchaser to hold the visible code in front of the camera.

9. The commodity identification system according to claim 8, wherein the processor prompts the purchaser to hold the visible code in front of the camera by displaying a text message on a screen of the shopping terminal.

10. The commodity identification system according to claim 8 or 9, wherein
the shopping terminal further includes a sound unit, and
the processor prompts the purchaser to hold the visible code in front of the camera by outputting a voice message using the sound unit.

11. A method of updating a commodity identification system that includes a camera interface, the method comprising:
acquiring a first image of a commodity from a camera via the camera interface;
detecting a commodity area within the first image, that shows the commodity;
attempting to identify the commodity from the commodity area based on a first copy of previously stored visual features for a plurality of commodities; and
upon the attempt to identify the commodity from the commodity area being unsuccessful, performing the following:
acquiring a second image of the commodity from the camera via the camera interface, wherein the second image includes a visible code;
generating error identification data that includes the first image and includes a commodity code associated with the visible code; and
updating the first copy of the previously stored visual features to include visual features of the commodity that are extracted from the first image.

12. The method according to claim 11, further comprising:
transmitting the generated error identification data to a point-of-sale (POS) server, wherein the POS server stores the transmitted error identification data.

13. The method according to claim 12, wherein, upon the generation of the error identification data, the POS server notifies an administrator to update the previously stored visual features.

14. The method according to claim 12 or 13, wherein the POS server updates a second copy of the previously stored visual features, based on the generated error identification data.

15. The method according to claim 14, wherein the POS server updates the second copy of the previously stored visual features automatically.
